# EUROPÄISCHE PATENTSCHRIFT

(11) **EP 2 161 199 B1**
(45) Veröffentlichungstag und Bekanntmachung des Hinweises auf die Patenterteilung: **18.08.2010**
(21) Anmeldenummer: 09006251.4
(22) Anmeldetag: 08.05.2009
(51) Int. Cl.: B64G 1/62, B64G 1/64, B64G 1/58

(54) **Raumfahrzeug mit Halte- und Trennvorrichtung**
Spacecraft comprising a holding and separation device
Véhicule spatial comportant un dispositif de retenue et de séparation

(30) Priorität: 03.09.2008 DE 102008046149
(43) Veröffentlichungstag der Anmeldung: 10.03.2010
(73) Patentinhaber: Astrium GmbH, 85521 Ottobrunn (DE)
(72) Erfinder: Rittweger, Andreas, Dr., 28232 Achim (DE); Christianson, Susanne, 28203 Bremen (DE); Bank, Cristian, 28237 Bremen (DE)
(74) Vertreter: Hansmann, Dierk

(56) Entgegenhaltungen:
- US-A- 6 135 391

## Beschreibung

Die Erfindung betrifft ein mehrteiliges Raumfahrzeug mit einer Halte- und Trennvorrichtung zwischen Modulen des mehrteiligen Raumfahrzeuges, d.h, zwischen einer Rückkehrkapsel und einem zugeordneten Versorgungsmodul, bestehend aus einer mehrteilig, zwischen der Rückkehrkapsel und dem Versorgungsmodul angeordneten Strebenkonstruktion als Strukturelemente, wobei der Rückkehrkapsel zugewandte Endbereiche als Halteelemente ausgebildet sind.

Halte- und Trennsysteme dieser Art zwischen einzelnen Modulen werden insbesondere bei Raumfahrzeugen verwendet, die nicht komplett zur Erde zurückkehren, sondern bei denen sich vor dem Wiedereintritt in die Erdatmosphäre beispielsweise eine Rückkehrkapsel von ihrem Versorgungsmodul oder anderen Teilen des Raumfahrzeuges trennt.

Raumfahrzeuge, die auf dieser Technik von Rückkehrkapseln basieren, sind bereits seit längerem in unterschiedlichen Varianten und Modellen bekannt. Den bekannten Modellen gemeinsam ist, daß bei ihnen die Rückkehrkapsel während der Startphase und beim Flug im Orbit Kapsel fest mit der Versorgungseinheit verbunden sein soll und der Haltemechanismus die dann auftretenden starken Vibrationsbelastungen und Beschleunigungskräfte übertragen muß. Bei den bisher bekannten Raumfahrzeugen werden zu diesem Zweck entweder kraftübertragende Sprengbolzen verwendet, die durch den Haupt-Hitzeschild hindurch die Kräfte zwischen der Versorgungseinheit und der Kapsel übertragen und die vor dem Wiedereintritt in die Erdatmosphäre gesprengt werden, um die beiden Module voneinander zu trennen, oder aber Spannbänder, die am versorgungsmodul befestigt sind und die die Kapsel mit ihrem Hitzeschild an entsprechenden Auflageflächen am Versorgungsmodul haltern. Diese letztgenannte Anordnung erfordert für eine sichere, kraftschlüssige Verbindung insbesondere bei Vibrationsbeanspruchungen in hinreichendem Maße zug- und druckbelastbare und damit vergleichsweise schwere Unterkonstruktionen, während die für diese Anordnung notwendigen Durchbrüche durch den Haupt-Hitzeschild zugleich komplexe Dichtungen und hitzeresistente Unterkonstruktionen erforderlich machen. Hinzu kommt, daß eine Kraftübertragung über oder durch den Hitzeschild die Verwendung schlagzäher und dichter und damit schwerer Hitzeschutzmaterialien erfordert. Moderne Hitzeschutzmaterialien aus Keramik bzw. Faserverbundkeramik wie beispielsweise Cabon/Carbon, Kohlenstoff oder C/SiC samt ihrer Unterkonstruktion sind demgegenüber zwar sehr leicht und steif, sie sind aber nicht optimal geeignet, große Druck- und Zugkräfte direkt zu überragen.

Eine Halte- und Trennvorrichtung zwischen einer Rückkehrkapsel und einem zugeordneten Versorgungsmodul ist aus der US-A-6,135,391 bekannt. Diese Vorrichtung weist eine mehrteilige, zwischen der Rückkehrkapsel und dem Versorgungsmodul angeordnete Strebenkonstruktion als Strukturelement auf. Dabei sind die der Rückkehrkapsel zugewandten Endbereiche als Halteelemente ausgebildet, welche die Rückkehrkapsel am Rand des primären Hitzeschutzschildes greifen und wobei eine steuerbare Auftrennung durch Freigabe der Halteelemente über Sprengelemente durchführbar ist. Hierdurch wird eine relativ aufwendige Anordnung geschaffen, ohne Kräfte direkt in die Struktur der Rückkehrkapsel einzuleiten.

Aufgabe der Erfindung ist es daher, einen Halte- und Trennmechanismus der eingangs genannten Art so auszubilden, daß er den Haupt-Hitzeschild und dessen Unterkonstruktion unbelastet von Vibrations- und statischen Lasten hält und daß er statt dessen die auftretenden Kräfte möglichst direkt in die lasttragende Struktur der Kapsel einleitet.

Die Erfindung löst diese Aufgabe dadurch, daß die Halteelemente oberhalb eines primären Hitzeschutzschildes in zugeordnete Hülsen greifen, die in einer äußeren aerodynamische Hülle der Rückkehrkapsel oberhalb des Übergangs des Haupt-Hitzeschildes zu einer rückwärtigen Wärmeisolierung angeordnet sind und eine steuerbare Auftrennung durch Freigabe der Halteelemente über Sprengelemente durchführbar ist.

Hierbei wird durch die vorgesehene Ausbildung die Kraft nicht über den Haupt-Hitzeschild geleitet wird und es muß weder das Material des Primär-Hitzeschutzes noch die Unterkonstruktion auf die auftretenden Kräfte ausgelegt werden. Auch werden Durchbrüche für kraftleitende Bolzen durch den Haupt-Hitzeschild vermieden, die in diesem hoch temperaturbeanspruchten Bereich kritische Fehlstellen im Hitzeschild darstellen würden und deren Isolierung einen hohen analytischen, konstruktiven und materialtechnischen Aufwand erfordern würde. Indem die bei der Erfindung vorgesehenen Halteklammern über den Rand des primären Hitzeschildes greifen und die Haltekräfte so direkt in die Primärstruktur der Kapsel einleiten, sind keine Durchbrüche im Haupt-Hitzeschild der Kapsel erforderlich und es kann ein effizienter und zugleich leichter keramischer Hitzeschild vorgesehen werden. Dies ermöglicht eine starke Vereinfachung sowohl der Konstruktion des Hitzeschildes als auch der darunterliegenden, lasttragenden Sekundärstruktur.

Weiter vorteilhafte Ausführungen sind durch die Merkmale der weiteren Unteransprüche gekennzeichnet.

Nachfolgend wird die Erfindung anhand von in der Zeichnung dargestellten Ausführungsbeispielen näher erläutert. Es zeigen:
- Fig. 1: eine Prinzipdarstellung einer Rückkehrkapsel mit einer Halte- und Trennvorrichtung zu einem Versorgungsmodul im verbundenen Zustand;
- Fig. 2: eine Prinzipdarstellung wie Fig. 1 im getrennten Zustand;
- Fig. 3: eine vergrößerte Detaildarstellung einer Anordnung zur Verbindung gemäß Fig. 1 und 2.

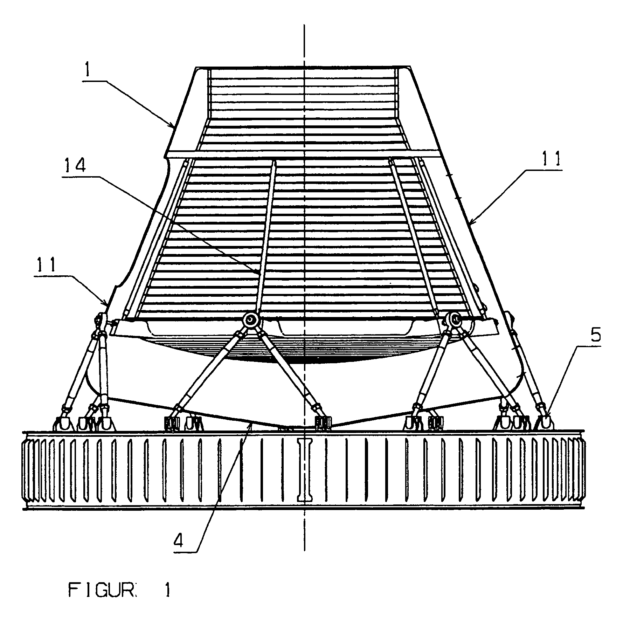

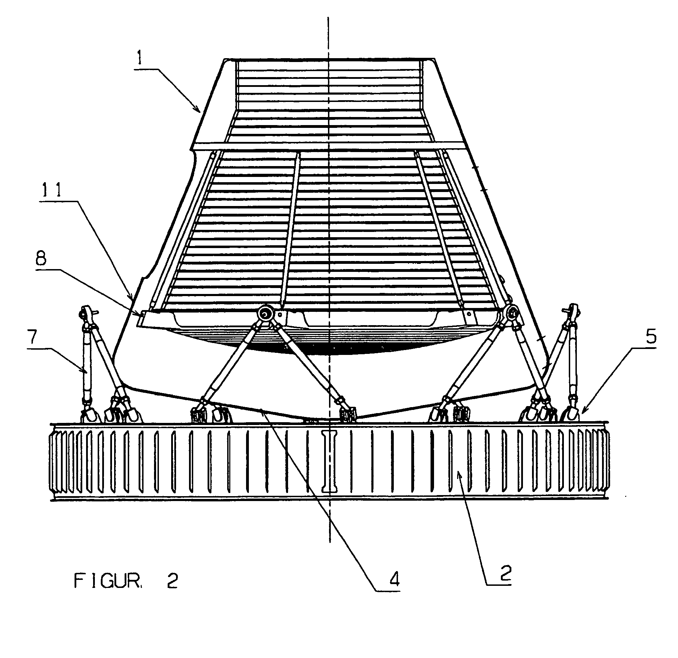

Ein prinzipieller Aufbau einer Anordnung mit einer Rückkehrkapsel 1 mit einer Halte- und Trennvorrichtung ist gemäß Fig. 1 und 2 dargestellt. Hierdurch wird ermöglicht, die während des Starts und im Orbitalflug auftretenden Kräfte von einem zugeordneten Versorgungsmodul 2 über eine mit einer Anzahl umfangsseitig angeordneter Halteelemente 3 versehene gelenkig gelagerte Strukturelemente 7 aus Streben und Bolzen direkt auf die tragende, unter der aerodynamischen Verkleidung liegende Primärstruktur der Rückkehrkapsel 1 zu leiten. Die Strukturelemente 7 greifen dabei um den Rand des Hitzeschilds 4 der Rückkehrkapsel 1 herum. Bei der Trennung der Rückkehrkapsel 1 vom Versorgungsmodul 2 werden die Halteelemente 3 über Federn 5 auseinandergedrückt und geben so das Wiedereintrittsmodul, d. h. die Rückkehrkapsel 1, frei.

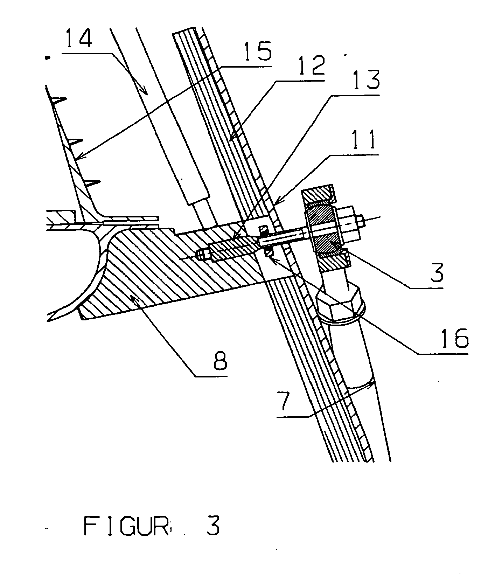

Im vorliegenden Fall sind sechs tragende Strebengruppen als Strukturelemente 7 vorgesehen, die an ihren oberen Enden jeweils ein Halteelement 3 zum Eingriff tragen. Der äußere Ring stellt hierbei den oberen Rand der tragenden Struktur des Versorgungsmoduls 2 dar, der die Lasten der Rückkehrkapsel 1 aufnimmt. Wie aus der Detaildarstellung in Fig. 3 ersichtlich, nehmen jeweils die Strukturelemente 7 die Kräfte vom Versorgungsmodul 2 auf und leiten sie in eine weitere, als Halteelement 3 ausgebildete Strebe, die an dieser Stelle die äußere aerodynamische Hülle 11 der Rückkehrkapsel 1 oberhalb des Übergangs des Haupt-Hitzeschildes 4 in die rückseitige Wärmeisolierung 12 durchbricht und in entsprechen ausgebildete Hülsen 8 in der aerodynamischen Hülle 11 greift. Innerhalb der aerodynamischen Hülle 11 verzweigt sich das tragende Strukturelement 7 in mehrere Streben 14, in diesem Fall in drei, die die Kräfte in die Primärstruktur der Rückkehrkapsel 1 weiterleiten.

Bei dem Ausführungsbeispiel ist gemäß Fig. 1 und 2 zur Trennung der kraftschlüssigen Verbindung je ein Sprengbolzen 13 pro Strukturelement 7 vorgesehen. Dieser ist knapp außerhalb der aerodynamischen Hülle der Kapsel 1 an der Stelle angeordnet, an der die Verbindung über die einzelne Strebe geleitet wird, die dann durch die Sprengung des Sprengbolzens 13 getrennt wird. Die äußeren Streben sind am Versorgungsmodul 2 über ein Federscharnier 5 dergestalt befestigt, daß sie nach der Auftrennung jeder Einzelstrebe oder Halteelement 3 nach außen klappen und damit das Rückkehrmodul 1 freigeben.

## Patentansprüche

1. Mehrteiliges Raumfahrzeug mit einer Halte- und Trennvorrichtung zwischen Modulen des mehrteiligen Raumfahrzeuges, d.h. zwischen einer Rückkehrkapsel (1) und einem zugeordneten Versorgungsmodul (2), bestehend aus einer mehrteilig, zwischen der Rückkehrkapsel (1) und dem Versorgungsmodul (2) angeordneten Strebenkonstruktion (7) als Strukturelemente, wobei der Rückkehrkapsel (1) zugewandte Endbereiche als Halteelemente (3) ausgebildet sind, **dadurch gekennzeichnet, daß** die Halteelemente (3) oberhalb eines primären Hitzeschutzschildes (4) in zugeordnete Hülsen (8) greifen, die in einer äußeren aerodynamischen Hülle (11) der Rückkehrkapsel (1) oberhalb des Übergangs des Haupt-Hitzeschildes (4) zu einer rückwärtigen Wärmeisolierung (12) angeordnet sind und dass eine steuerbare Auftrennung durch Freigabe der Halteelemente (3) über Sprengelemente (13) durchführbar ist.

2. Mehrteiliges Raumfahrzeug mit einer Halte- und Trennvorrichtung gemäß Anspruch 1, **dadurch gekennzeichnet, daß** die Strebenkonstruktion (7, 27) als Strukturelemente im Durchbruch durch die aerodynamische Hülle (11) der Rückkehrkapsel (1) in wenigstens einer Strebe (14) zusammenläuft.

3. Mehrteiliges Raumfahrzeug mit einer Halte- und Trennvorrichtung gemäß Anspruch 1 oder 2, **dadurch gekennzeichnet, daß** die außerhalb der Rückkehrkapsel (1) befindliche Strebenkonstruktion (7, 27) über ein Federscharnier (5, 25) drehbar gelagert ist.

## Claims

1. Multi-part space vehicle with a holding and separating device between modules of said vehicle, i.e. between a return capsule (1) and an associated supply module (2), consisting of a strut-type structure (7) in the form of structural elements, which is arranged in a number of parts between said return capsule (1) and said supply module (2), wherein end regions that face towards the return capsule (1) are constructed as holding elements (3), **characterised in that** the holding elements (3) engage, above a primary heat protection shield (4), in associated sleeves (8) which are arranged in an outer aerodynamic envelope (11) of the return capsule (1) above the transition of the main heat-shield (4) to a rear thermal insulation, and that controllable separation can be carried out as a result of the releasing of the holding elements (3) via explosive elements (13).

2. Multi-part space vehicle with a holding and separating device according to claim 1, **characterised in that** the strut-type structure (7, 27) in the form of structural elements converges, in the opening through the aerodynamic envelope (11) of the return capsule (1), into at least one strut (14).

3. Multi-part space vehicle with a holding and separating device according to claim 1 or 2, **characterised in that** the strut-type structure (7, 27) located outside the return capsule (1) is rotatably mounted via a spring hinge (5, 25).

## Revendications

1. Véhicule spatial à plusieurs étages, comprenant un dispositif de retenue et de séparation entre des modules du véhicule spatial à plusieurs étages, c'est-à-dire entre une capsule de retour (1) et un module de service (2) y associé, lequel consiste en une construction à entretoises (7) à plusieurs éléments, en tant qu'éléments structurels, disposée entre la capsule de retour (1) et le module de service (2), des zones terminales, dirigées vers la capsule de retour (1), étant conçues en tant qu'éléments de retenue (3), **caractérisé en ce que** les éléments de retenue (3) s'engagent, au-dessus d'un bouclier thermique primaire (4), dans des douilles (8) associées, qui sont agencées dans une enveloppe extérieure aérodynamique (11) de la capsule de retour (1), au dessus de la zone de transition entre ledit bouclier thermique principal (4) et l'isolation thermique arrière (12), et **en ce qu'**une séparation commandée peut être exécutée par libération des éléments de retenue (3), par l'intermédiaire d'éléments explosifs (13).

2. Véhicule spatial à plusieurs étages, comprenant un dispositif de retenue et de séparation selon la revendication 1, **caractérisé en ce que** la construction à entretoises (7, 27), sous la forme d'éléments structurels, à la traversée de l'enveloppe extérieure aérodynamique (11) de la capsule de retour (1), se prolonge en au moins une entretoise (14).

3. Véhicule spatial à plusieurs étages comprenant un dispositif de retenue et de séparation selon la revendication 1 ou 2, **caractérisé en ce que** la construction à entretoises (7, 27), située à l'extérieur de la capsule de retour (1), est montée à pivotement au moyen d'une charnière à ressort (5, 25).
